# EUROPEAN PATENT SPECIFICATION

(11) **EP 3 262 262 B1**
(45) Date of publication and mention of the grant of the patent: **07.04.2021**
(21) Application number: 16712496.5
(22) Date of filing: 15.02.2016
(51) Int. Cl.: E05D 5/02

(54) **THE DEVICE FOR FIXING ACCESSORIES ON DOORS OR WINDOWS**
VORRICHTUNG ZUR BEFESTIGUNG VON ZUBEHÖR AN TÜREN ODER FENSTERN
DISPOSITIF DE FIXATION D'ACCESSOIRES SUR DES PORTES OU DES FENÊTRES

(30) Priority: 24.02.2015 IT BO20150094
(43) Date of publication of application: 03.01.2018
(73) Proprietor: GIESSE S.P.A., 40054 BUDRIO (BO) (IT)
(72) Inventor: LAMBERTINI, Marco, 40068 San Lazzaro di Savena (IT)
(74) Representative: Milli, Simone
(86) International application number: PCT/IB2016/050790
(87) International publication number: WO 2016/135579

(56) References cited:
- FR-A1- 2 548 293
- US-A- 1 820 667
- US-A- 3 908 330
- US-A- 4 830 531
- US-A- 5 199 836

## Description

### Technical field

This invention relates to a device for fixing accessories on doors or windows.

More specifically, the fixing device according to the invention is applicable to accessories used on doors or windows having profiles of their frame equipped with a perimeter channel formed by a pair of parallel wings protruding from the bottom of the profile and equipped with corresponding end stretches which are perpendicular (horizontal) to the rest of the wing and facing each other to form, with the rest of the wing, an inverted "L".

The distance between the two end stretches forms a passage opening for the inside of the channel.

### Background art

Currently, the accessories mounted on these profiles of doors or windows for the operation (such as, for example, hinges) or for opening or closing (such as, for example, striker elements for bolts) are accessories which must be positioned and permanently attached to the channel.

The are mainly two types of known fixing devices.

The first type of device (shaped striker plugs) is associated, loosely and by screw means, to a lower portion of the body of the accessory.

The fixing device has geometrical features such that it can enter the channel through a free front access in the opening of the channel or by a first inclined jamming movement of the body of the accessory relative to the channel and subsequent resting of the body on the channel.

Subsequently, the device is moved toward the lower part of the body of the accessory, by screwing screw means, up to abutting with the inside walls of the horizontal stretches.

The second type of the fixing device, of particular interest in this description, is used for accessories with front positioning on the channel (that is to say, in contact with the horizontal stretches) and/or in the presence of shallow channels where a traditional plug could not be housed.

This device comprises a plate with a flat extension and thin thickness equipped with a cam profile forming a rhomboid perimeter shape.

The plate has a central seat connected with an articulated operating shaft on the body of the accessory.

The plate and the shaft are pre-mounted on the body of the accessory and it is inserted longitudinally inside the channel.

After the body rests on the upper part of the channel, a rotation is caused of at least a right angle of the plate to come into contact with the inside opposite walls of the vertical stretches of the channel and simultaneously, by arranging the flat surface of the plate facing the inside walls of the horizontal end stretches of the wings.

Now, if on the one hand this system is relatively simple and fast to assemble, on the other hand it may lack in precision, safety and reliability over time.

In addition, it is important to consider that in the field of profiled sections, the sizes of the channel may vary, and specifically these sizes:
- the distance between the two inside walls (or sides) of the wings;
- the distance between the two ends of the horizontal end stretches (forming the width of the upper opening of the channel) and
- the thickness of the end stretches.

As mentioned, these sizes may vary, even if by a few millimetres, from one manufacturer to the next, for both technical and commercial reasons.

These different sizes of the channels cause a problem for manufacturers of accessories, since the mentioned fixing plate must be produced in different models and with different sizes of its longitudinal extension so that it can be correctly used on the various types of channels present on the market.

This results in increased production and storage costs for the manufacturer which is reflected also on the cost of the accessory as a whole

Prior art documents FR 2 548 293 A1, US 5 199 836 A and US 1 820 667 A disclose similar fixing devices for accessories to be positioned to a channel of a framed profile.

### Disclosure of the invention

The aim of this invention is to provide a device for fixing accessories on doors or windows which overcomes the above-mentioned disadvantages of the prior art.

More specifically, the aim of this invention is to provide a device for fixing accessories on doors or windows which can adapt to the different types of channels present on the market.

A further aim of this invention is to provide a device for fixing accessories on doors or windows which can guarantee a secure fixing of the accessory, combined with a simple, secure and rapid locking operation.

These aims are fully achieved by the fixing device according to this invention as characterised in the appended claims.

More specifically, the device for fixing accessories on doors or windows is used on doors and windows comprising a fixed frame and a mobile frame. The fixed frame and the mobile frame are each equipped with a perimeter channel formed by a pair of parallel wings protruding from a bottom of a profile.

The pair of wings is equipped with corresponding end stretches parallel to the bottom of the profile and facing each other to delimit an upper opening. The fixing device comprises a body-plate and a connecting element rotatably connected to a body of an accessory to be fixed to the channel.

The body-plate is equipped with a rhomboid perimeter profile forming two end heads, configured in the fashion of a cam, for the contact on both sides, with interference, on corresponding inside walls of the pair of wings following a rotation of the body-plate inside the channel and about an axis which is transversal relative to the bottom of the channel.

The device comprises a prismatic body, made between the body-plate and the connecting element, and having a rhomboid perimeter profile forming two further cam end heads configured for a contact on both sides, with interference, on corresponding side walls of the end stretches, following the rotation, in such a way as to form a further second point for locking the body of the accessory in the channel.

Thanks to this structure, the device is suitable for the different sizes of the channel, it being able to be constrained to four different surfaces of the components forming the channel in such a way as to compensate for any dimensional differences present between the same components (distance of wings, distance and thickness of the end stretches)

According to the invention, the body-plate is connected to the prismatic body with a surface which is inclined relative to the axis of rotation, at least along the portions of the two bodies forming the corresponding end heads, wherein the inclined surface forms a third locking zone on both sides inside the channel, following the rotation, by the contact with interference of the inclined surface on the vertex formed by the side and lower walls of the end stretches.

Thanks to this inclined surface, therefore, the locking (self-adapting) forms a series of almost consecutive constraining zones which guarantee greater safety and adaptability of the fixing system.

### Brief description of drawings

This and other features of the invention will become more apparent from the following detailed description of a preferred, non-limiting example embodiment of it, with reference to the accompanying drawings, in which:
- Figure 1 is a perspective view of an accessory for doors and windows equipped with the fixing device according to this invention;
- Figures 2 and 3 are both plan views from below of the fixing device according to this invention, applied on a body of the accessory of Figure 1 and in two different operating configurations;
- Figure 4 shows one of the fixing devices of Figures 2 and 3 in detail and in a non-operating and housing configuration in the channel;
- Figure 5 illustrates a cross-section V-V of Figure 4;
- Figure 6 shows one of the fixing devices of Figures 2 and 3 in detail and in a first fixing operating configuration;
- Figure 7 illustrates a cross-section VII-VII of Figure 6;
- Figure 8 shows one of the fixing devices of Figures 2 and 3 in detail and in a second fixing operating configuration;
- Figure 9 illustrates a cross-section IX-IX of Figure 8;
- Figure 10 is a scaled-up perspective view of a fixing device according to this invention;

- Figure 11 shows the fixing device of the previous figures applied inside a channel of a fixed frame of doors or windows in a front view with some parts in cross-section;
- Figure 12 is a scaled-up detail A of Figure 11.

### Detailed description of preferred embodiments of the invention

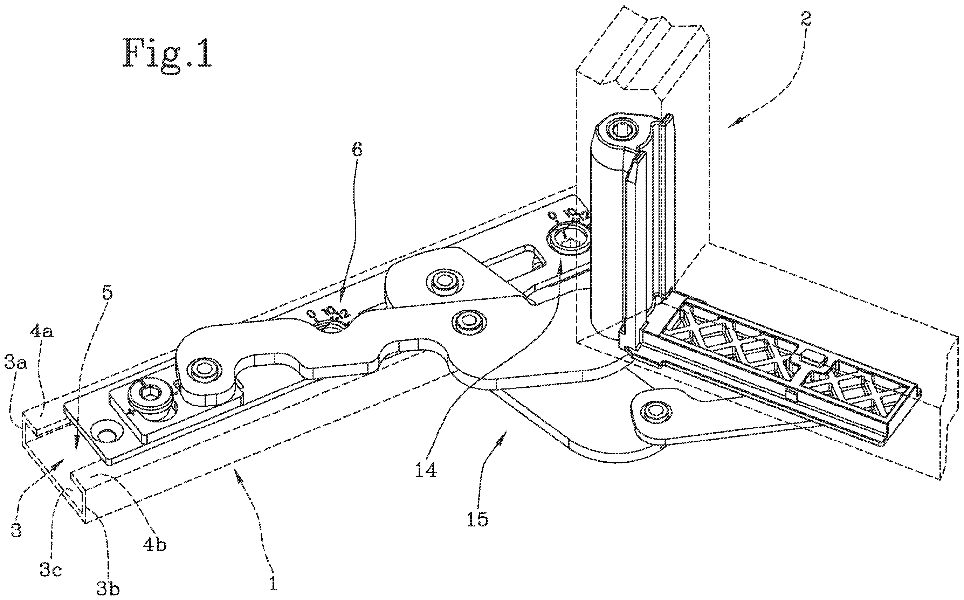

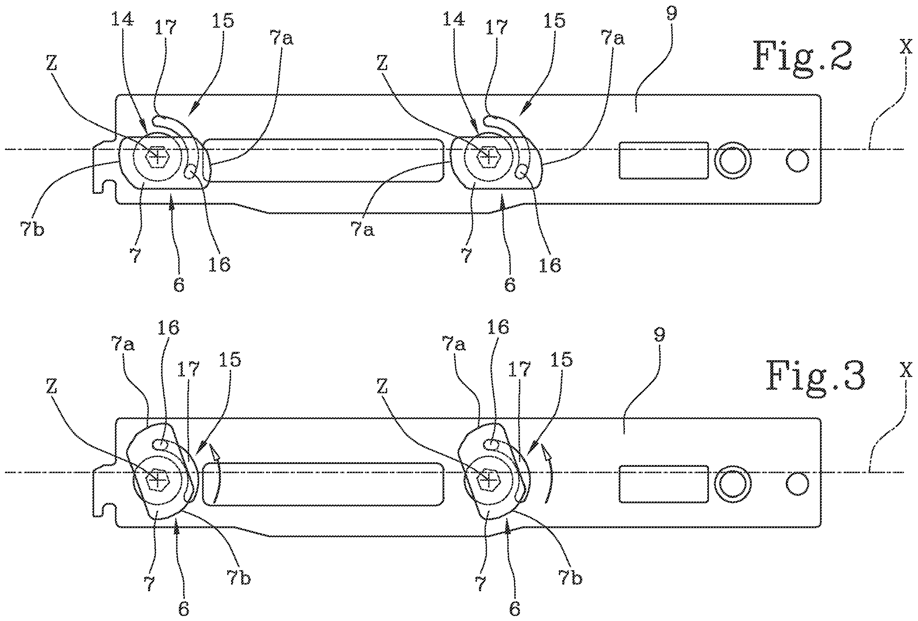

With reference to the accompanying drawings, in particular Figures 1 to 3, the numeral 6 denotes as a whole the fixing device according to the invention, used for fixing accessories on doors or windows.

The expression "accessories" refers operating components applicable to the door or window or accessories for opening or closing the door or window (for example, strikers for stopping closing bolts).

In the non-limiting example illustrated in Figure 1, the fixing device 6 is applied to a concealed hinge 19 which can be associated with a fixed frame 1 of the door or window and with a mobile frame 2 (or wing).

The hinge 19, which will not be described in detail, comprises a plate 9 with a mainly flat extension which can be positioned above a channel 3 present on the fixed frame 1.

The door or window comprises, therefore, a fixed frame 1 and a mobile frame 2, each equipped with a perimeter channel 3 formed by a pair of parallel wings 3a, 3b protruding from a bottom 3c of a profile (forming the corresponding frame).

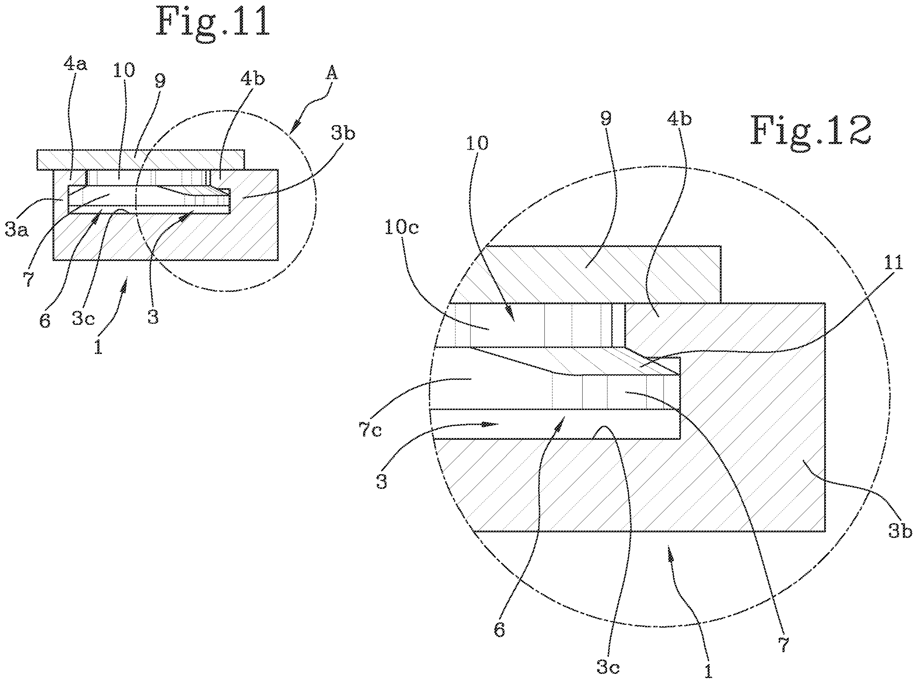

The pair of wings 3a, 3b is equipped with corresponding end stretches 4a, 4b parallel to the bottom 3c of the profile and facing each other to delimit an upper opening 5 (see also Figures 11 and 12).

The fixing device 6 may therefore be used without distinction on accessories which can be associated with the fixed frame 1 or with the mobile frame 2.

The fixing device 6 comprises a body-plate 7 and a connecting element 8 rotatably connected to a body 9 of an accessory to be fixed to the channel 3 (in the case illustrated, the fixed plate of the hinge 19). The body-plate 7 is equipped with a rhomboid perimeter profile forming two end heads 7a, 7b, configured in the fashion of a cam, for the contact on both sides, with interference, on corresponding inside walls of the pair of wings 3a, 3b following a rotation of the body-plate 7 inside the channel 3 and about an axis Z which is transversal relative to the bottom 3c of the channel 3.

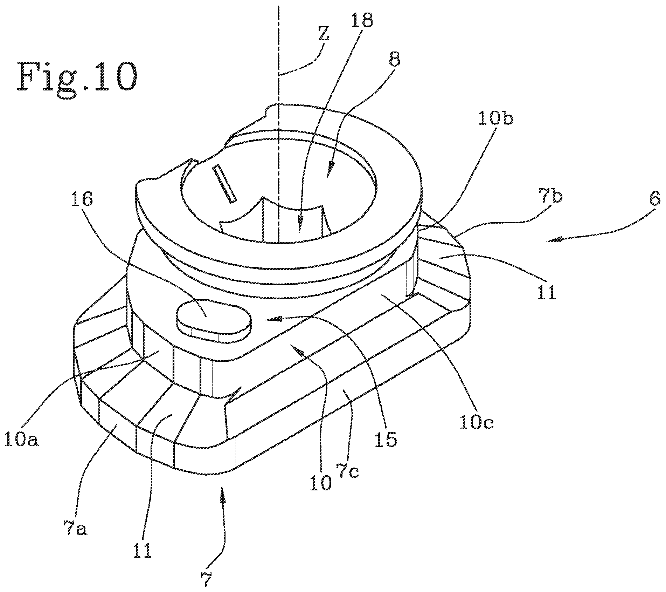

According to the invention, the fixing device 6 comprises a prismatic body 10, made between the body-plate 7 and the connecting element 8 (see Figure 10).

Again according to the invention, the prismatic body 10 has a rhomboid perimeter profile forming two further cam end heads 10a, 10b configured for a contact on both sides, with interference, on corresponding side walls of the end stretches 4a, 4b, following the mentioned rotation, in such a way as to form a further second point for locking the body 9 of the accessory in the channel 3.

In other words, the fixing device 6 has two superposed bodies designed to form two separate locking zones (on four points) relating to two different zones of the channel 3 (wings or end stretches). This structure guarantees a greater hold of the device inside the channel and its adaptability to different sizes formed by the same channel 3 (specifically, the distance between the two inside walls or sides of the wings 3a, 3b, the distance between the two ends of the end stretches 4a, 4b forming the width of the upper opening 5 of the channel 6 and also the thickness of the same end stretches).

Preferably, the body-plate 7 has a prismatic shape (see Figure 10).

In light of this, the prismatic body 10 has a perimeter profile shaped to match the perimeter profile of the body-plate 7.

Also, it should be noted that the prismatic body 10 has a smaller volumetric size relative to the volumetric size of the body-plate 7.

This architecture makes it possible to adapt the contact heads of each body to the internal sizes of the channel 3 (internal distance between the wings for body-plate 7 and distance between the end stretches forming the upper opening 5 for the prismatic body 10).

According to the invention, the body-plate 7 is connected to the prismatic body 10 with a surface 11 which is inclined relative to the axis Z of rotation, at least along the portions of the two bodies 7, 10 forming the corresponding end heads 7a, 7b and 10a, 10b.

In light of this, the inclined surface 11 forms a third locking zone on both sides inside the channel 3, following the mentioned rotation, by the contact, with interference, of the inclined surface 11 on the vertex formed by the side and lower walls of the end stretches 4a, 4b (see specifically Figures 11 and 12).

Thanks to this inclined surface, therefore, the locking (self-adapting) forms a series of almost consecutive constraining zones which guarantee greater safety and adaptability of the fixing system.

Preferably, the corresponding end heads 7a, 7b and 10a, 10b) of the body-plate 7 and of the prismatic body 10 have the face walls 12 and 13 formed by a plurality of consecutive wall segments with different angular extension in such a way as to form corresponding walls with discontinuous surfaces able to increase the interference friction against the walls of the channel 3, following the rotation about the axis Z.

Preferably, the body-plate 7 and the prismatic body 10 have an extension which is asymmetrical relative to the axis Z of rotation which is transversal to the bottom 3c of the channel 3.

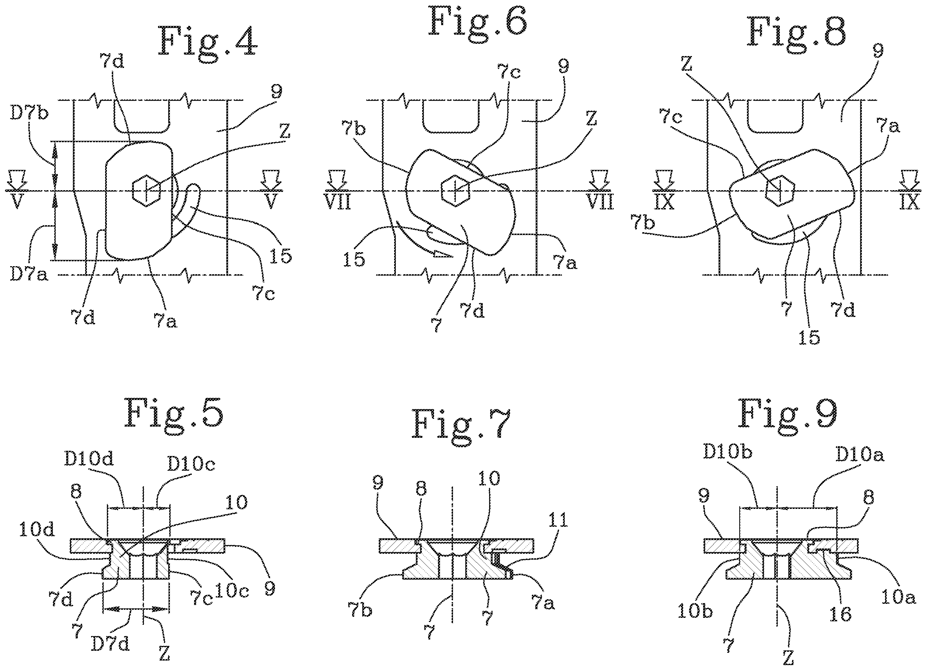

In other words, the two end heads 7a, 7b and 10a, 10b of each body 7 and 10 are at different distances D7a, D7b and D10a, D10b relative to the axis Z of rotation (see also Figures 4 to 9).

Again preferably, the body-plate 7 and the prismatic body 10 have an asymmetrical transversal extension relative to the transversal axis Z of rotation.

In other words, the distance between the pairs of rectilinear walls or sides 7c, 7d and 10c, 10d of each body 7 and 10 is at different distances D7c, D7d and D10c, D10d relative to the axis Z of rotation (see again Figures 4 to 9).

To obtain these eccentric arrangements of the bodies 7 and 10, the connecting element 8 (used as a member for the rotation) is positioned (formed) eccentric on the two bodies 7 and 10.

It should be noted that these eccentric geometrical components of the body-plate 7 and of the prismatic body 10 contribute to the flexibility of use of the fixing device 6 at the different sizes of the channels 3.

In light of this, the connecting element 8 is connected to the body 9 of the accessory in a seat 14 made asymmetrically relative to a longitudinal middle axis X of the body 9 of the accessory.

Preferably, the connecting element 8 is cylindrical in shape.

More specifically, the connecting element 8 is coupled, with the possibility of rotation, in a corresponding seat 14 made on the body 9 of the accessory.

The connecting element 8, which forms an operating head for the fixing device 6, is constrained, rotatably, to the body 9 of the accessory by, for example but without restricting the scope of the invention, pressing the upper edge able to hold the entire device 6 connected to the body 9 of the accessory (with the bodies 7 and 10 suspended under of the body 9 itself) but with the possibility of rotation about the axis Z.

Preferably, the connecting element 8 has a central seat 18 for engaging an operation for the rotation of the two bodies 7 and 10.

Preferably, the fixing device 6 comprises guide and end-of-stroke means 15 positioned between the prismatic body 10 and the body 9 of the accessory to form at least two limit operating positions between a first position of free passage of the body-plate 7 through the opening 5 formed by the end stretches 4a, 4b (Figures 4 and 5), and a second position of maximum interference of the body-plate 7 and the prismatic body 10 on the wings 3a, 3b and on the end stretches 4a, 4b, in which the bodies 7, 10 are rotated by a predetermined angle α relative to the first position of free passage (Figures 6 to 9).

In light of this, the guide and end-of-stroke means 15 comprise a pin 16 protruding from an upper horizontal surface of the prismatic body 10.

The pin 16 is constrained, in use, inside an arc-shaped slot 17 made on the body 9 of the accessory.

The extension of the slot 17 forms, therefore, the maximum angle of rotation which can be reached by the fixing device 6.

These means make it possible to quickly and precisely check the exact angular position of the bodies 7 and 10 and to perform the fixing operations (and releasing operations, if necessary) of the same bodies according to correct angles within a predetermined range.

Thanks to this structure, the fixing device according to the invention fully achieves the pre-set aims.

More specifically:
- the presence of a second body adds an upper, second fixing point, thus compensating for any lack of contact of the lower body-plate;
- the presence of the inclined surface adds a further contact and fixing point in the channel, thus increasing the holding resistance of the accessory to the channel;
- the eccentric structure of the bodies relative to the axis of rotation combined with the eccentricity of the arrangement of the axis of rotation relative to the longitudinal axis of the supporting body of the accessory make it possible to adapt and compensate for any size differences inside the channel and to always guarantee the stable contact of the surfaces of the bodies to the corresponding zones of the channel, while maintaining a correct position of the body of the accessory on the channel.

## Claims

1. A device for fixing accessories on doors or windows, the door or window having a fixed frame (1) and a mobile frame (2), each equipped with a perimeter channel (3) defined by a pair of parallel wings (3a, 3b) protruding from a bottom (3c) of a profile; the pair of wings (3a, 3b) being equipped with corresponding end stretches (4a, 4b) parallel to the bottom (3c) of the profile and facing each other to delimit an upper opening (5); the fixing device (6) comprising at least one body-plate (7) and a connecting element (8) configured to be rotatably connected to a body (9) of an accessory to be fixed to the channel (3); the body-plate (7) being equipped with a rhomboid perimeter profile forming two end heads (7a, 7b), configured in the fashion of a cam, for the contact on both sides, with interference, on corresponding inside walls of the pair of wings (3a, 3b) following a rotation of the body-plate (7) inside the channel (3) and about an axis (Z) which is transversal relative to the bottom (3c) of the channel (3); the fixing device further comprising a prismatic body (10), made between the body-plate (7) and the connecting element (8), and having a rhomboid perimeter profile forming two further cam end heads (10a, 10b) configured for a contact on both sides, with interference, on corresponding side walls of the end stretches (4a, 4b), following the rotation, in such a way as to form a further second point for locking the body (9) of the accessory in the channel (3)
**characterised in that** the body-plate (7) is connected to the prismatic body (10) with a surface (11) which is inclined relative to the axis (Z) of rotation, at least along the portions of the two bodies (7, 10) forming the corresponding end heads (7a, 7b, 10a, 10b); the inclined surface (11) forming a third locking zone on both sides inside the channel (3), following the rotation, by the contact with interference of the inclined surface on the vertex formed by the side and lower walls of the end stretches (4a, 4b).

2. The device according to claim 1, wherein the body-plate (7) has a prismatic shape, and wherein the prismatic body (10) has a perimeter profile shaped to match the perimeter profile of the body-plate (7); the prismatic body (10) having a smaller volumetric size relative to the volumetric size of the body-plate (7).

3. The device according to any one of the preceding claims, wherein the corresponding end heads (7a, 7b, 10a, 10b) of the body-plate (7) and of the prismatic body (10) have the face walls (12, 13) formed by a plurality of consecutive wall segments with different angular extension in such a way as to form corresponding walls with discontinuous surfaces able to increase the interference friction against the walls of the channel (3), following the rotation about the axis (Z).

4. The device according to any one of the preceding claims, wherein the connecting element (8) is cylindrical in shape; the connecting element (8) being coupled, with the possibility of rotation, in a corresponding seat (14) made on the body (9) of the accessory.

5. The device according to any one of the preceding claims, wherein the body-plate (7) and the prismatic body (10) have an extension which is asymmetrical relative to the axis (Z) of rotation which is transversal to the bottom (3c) of the channel (3), that is to say, the two end heads (7a, 7b, 10a, 10b) of each body (7, 10) are at different distances (D7a, D7b, D10a, D10b) relative to the axis (Z) of rotation.

6. The device according to any one of the preceding claims, wherein, the body-plate (7) and the prismatic body (10) have an asymmetrical transversal extension relative to the transversal axis (Z) of rotation, that is, the distance between the pairs of rectilinear walls or sides (7c, 7d, 10c, 10d) of each body (7, 10) are at different distances (D7c, D7d, D10c, D10d) relative to the axis (Z) of rotation.

7. The device according to any one of the preceding claims, wherein the connecting element (8) is configured to be connected to the body (9) of the accessory in a seat (14) made asymmetrically relative to a longitudinal middle axis (X) of the body (9) of the accessory.

8. The device according to any one of the preceding claims, comprising guide and end-of-stroke means (15) positioned between the prismatic body (10) and the body (9) of the accessory to form at least two limit operating positions between a first position of free passage of the body-plate (7) through the opening (5) formed by the end stretches (4a, 4b), and a second position of maximum interference of the body-plate (7) and the prismatic body (10) on the wings (3a, 3b) and on the end stretches (4a, 4b), wherein the bodies (7, 10) are rotated by a predetermined angle (α) relative to the first position of free passage.

9. The device according to claim 8, wherein the guide and end-of-stroke means (15) comprise a pin (16) protruding from an upper horizontal surface of the prismatic body (10); the pin (16) being constrained, in use, inside an arc-shaped slot (17) made on the body (9) of the accessory.

## Patentansprüche

1. Vorrichtung zur Befestigung von Zubehör an Türen oder Fenstern, wobei die Tür oder das Fenster einen fixen Rahmen (1) und einen beweglichen Rahmen (2) aufweist, von denen ein jeder mit einem Umfangskanal (3) ausgestattet ist, definiert durch ein Paar paralleler Flügel (3a, 3b), die aus einer Unterseite (3c) eines Profils hervorstehen, wobei das Paar von Flügeln (3a, 3b) mit entsprechenden Endteilstücken (4a, 4b) parallel zur Unterseite (3c) des Profils ausgestattet ist, die einander zugewandt sind, um eine obere Öffnung (5) zu begrenzen,
wobei die Befestigungsvorrichtung (6) mindestens eine Körperplatte (7) und ein Verbindungselement (8) umfasst, konfiguriert, um drehbar mit einem Körper (9) eines Zubehörs, das am Kanal (3) zu befestigen ist, verbunden zu werden, wobei die Körperplatte (7) mit einem rautenförmigen Umfangsprofil ausgestattet ist, formend zwei Endköpfe (7a, 7b), konfiguriert in der Weise eines Nockens, für den Kontakt an beiden Seiten mit Interferenz an entsprechenden innenseitigen Wänden des Paars von Flügeln (3a, 3b), folgend einer Drehung der Körperplatte (7) im Kanal (3) und um eine Achse (Z), die quer zur Unterseite (3c) des Kanals (3) angeordnet ist, wobei die Befestigungsvorrichtung zudem einen prismatischen Körper (10) umfasst, der zwischen der Körperplatte (7) und dem Verbindungselement (8) ausgebildet ist, und aufweisend ein rautenförmiges Umfangsprofil, formend zwei weitere Nockenendköpfe (10a, 10b), konfiguriert für einen Kontakt an beiden Seiten mit Interferenz an entsprechenden Seitenwänden der Endteilstücke (4a, 4b), folgend der Drehung, sodass ein weiterer zweiter Punkt zum Festspannen des Körpers (9) des Zubehörs im Kanal (3) geformt wird,
**dadurch gekennzeichnet, dass** die Körperplatte (7) mit dem prismatischen Körper (10) mit einer Oberfläche (11) verbunden ist, die relativ zur Rotationsachse (Z) geneigt ist, mindestens entlang der Abschnitte der zwei Körper (7, 10), formend die entsprechenden Endköpfe (7a, 7b, 10a, 10b), wobei die geneigte Oberfläche (11) eine dritte Festspannzone an beiden Seiten im Kanal (3) formt, folgend der Drehung, durch den Kontakt mit Interferenz der geneigten Oberfläche am Scheitel, geformt durch die seitlichen und unteren Wände der Endteilstücke (4a, 4b).

2. Vorrichtung nach Anspruch 1, wobei die Körperlatte (7) eine prismatische Form aufweist und wobei der prismatische Körper (10) ein Umfangsprofil aufweist, das passend zum Umfangsprofil der Körperplatte (7) ausgeformt ist, wobei der prismatische Körper (10) eine kleinere volumetrische Größe relativ zur volumetrischen Größe der Körperplatte (7) aufweist.

3. Vorrichtung nach einem der vorhergehenden Ansprüche, wobei die entsprechenden Endköpfe (7a, 7b, 10a, 10b) der Körperplatte (7) und des prismatischen Körpers (10) Seitenflächenwände (12, 13) aufweisen, die durch eine Vielzahl von aufeinanderfolgenden Wandsegmenten mit unterschiedlicher Winkelausdehnung geformt sind, sodass entsprechende Wände mit unterbrochenen Oberflächen geformt werden, die in der Lage sind, die Interferenzreibung gegen die Wände des Kanals (3) zu erhöhen, folgend der Drehung um die Achse (Z).

4. Vorrichtung nach einem der vorhergehenden Ansprüche, wobei das Verbindungselement (8) eine zylindrische Form aufweist, wobei das Verbindungselement (8) in einem entsprechenden Sitz (14), der auf dem Körper (9) des Zubehörs ausgebildet ist, gekuppelt ist, mit der Möglichkeit sich zu drehen.

5. Vorrichtung nach einem der vorhergehenden Ansprüche, wobei die Körperplatte (7) und der prismatische Körper (10) eine Ausdehnung aufweisen, die relativ zur Rotationsachse (Z) symmetrisch ist, die quer zur Unterseite (3c) des Kanals (3) verläuft, d. h., dass die zwei Endköpfe (7a, 7b, 10a, 10b) eines jeden Körpers (7, 10) in verschiedenen Abständen (D7a, D7b, D10a, D10b) relativ zur Rotationsachse (Z) liegen.

6. Vorrichtung nach einem der vorhergehenden Ansprüche, wobei die Körperplatte (7) und der prismatische Körper (10) eine asymmetrische Querausdehnung relativ zur Querrotationsachse (Z) aufweisen, d. h., dass der Abstand zwischen den Paaren von geradlinigen Wänden oder Seiten (7c, 7d, 10c, 10d) eines jeden Körpers (7, 10) in verschiedenen Abständen (D7c, D7d, D10c, D10d) relativ zur Rotationsachse (Z) liegen.

7. Vorrichtung nach einem der vorhergehenden Ansprüche, wobei das Verbindungselement (8) konfiguriert ist, um mit dem Körper (9) des Zubehörs in einem Sitz (14) verbunden zu werden, der asymmetrisch relativ zu einer Längsmittelachse (X) des Körpers (9) des Zubehörs ausgebildet ist.

8. Vorrichtung nach einem der vorhergehenden Ansprüche, umfassend Führungs- und Endlagenmittel (15), die zwischen dem prismatischen Körper (10) und dem Körper (9) des Zubehörs positioniert sind, um mindestens zwei Endlagenpositionen zwischen einer ersten Position des freien Durchgangs der Körperplatte (7) durch die Öffnung (5), geformt durch die Endteilstücke (4a, 4b), und einer zweiten Position der maximalen Interferenz der Körperplatte (7) und des prismatischen Körpers (10) auf den Flügeln (3a, 3b) und an den Endteilstücken (4a, 4b) zu formen, wobei die Körper (7, 10) um einen vorgegebenen Winkel (α) relativ zur ersten Position des freien Durchgangs gedreht werden.

9. Vorrichtung nach Anspruch 8, wobei die Führungs- und Endlagenmittel (15) einen Zapfen (16) umfassen, der aus einer oberen horizontalen Oberfläche des prismatischen Körpers (10) hervorsteht, wobei der Zapfen (16) in Verwendung in einer bogenförmigen Nut (17) fixiert ist, die auf dem Körper (9) des Zubehörs ausgebildet ist.

## Revendications

1. Dispositif de fixation d'accessoires sur des portes ou des fenêtres, la porte ou la fenêtre comportant un cadre fixe (1) et un cadre mobile (2), chacun étant équipé d'un canal périphérique (3) défini par une paire d'ailettes parallèles (3a, 3b) dépassant d'un fond (3c) d'un profil ; la paire d'ailettes (3a, 3b) étant équipée de portions d'extrémité (4a, 4b) correspondantes parallèles au fond (3c) du profil et se faisant face pour délimiter une ouverture supérieure (5) ;
le dispositif de fixation (6) comprenant au moins un corps-plaque (7) et un élément de raccordement (8) configuré pour être relié de manière rotative à un corps (9) d'un accessoire à fixer au canal (3) ; le corps-plaque (7) étant équipé d'un profil périphérique rhomboïdal formant deux têtes d'extrémité (7a, 7b), configurées à la manière d'une came, pour le contact des deux côtés, avec interférence, sur les parois intérieures correspondantes de la paire d'ailettes (3a, 3b) suite à une rotation du corps-plaque (7) à l'intérieur du canal (3) et autour d'un axe (Z) étant transversal par rapport au fond (3c) du canal (3) ; le dispositif de fixation comprenant de plus un corps prismatique (10), réalisé entre le corps-plaque (7) et l'élément de raccordement (8), et ayant un profil périphérique rhomboïdal formant deux têtes d'extrémité (10a, 10b) à came supplémentaires configurées pour un contact des deux côtés, avec interférence, sur les parois latérales correspondantes des portions d'extrémité (4a, 4b), suite à la rotation, de manière à former un deuxième point supplémentaire pour le verrouillage du corps (9) de l'accessoire dans le canal (3),
**caractérisé en ce que** le corps-plaque (7) est relié au corps prismatique (10) à une surface (11) étant inclinée par rapport à l'axe (Z) de rotation, au moins le long des parties des deux corps (7, 10) formant les têtes d'extrémité (7a, 7b, 10a, 10b) correspondantes ; la surface inclinée (11) formant une troisième zone de verrouillage des deux côtés à l'intérieur du canal (3), suite à la rotation, par le contact avec l'interférence de la surface inclinée sur le sommet formé par les parois latérales et inférieures des portions d'extrémité (4a, 4b) .

2. Dispositif selon la revendication 1, dans lequel le corps-plaque (7) a une forme prismatique, et dans lequel le corps prismatique (10) a un profil de périmètre façonné pour correspondre au profil de périmètre du corps-plaque (7) ; le corps prismatique (10) ayant une taille volumétrique plus petite par rapport à la taille volumétrique du corps-plaque (7).

3. Dispositif selon l'une quelconque des revendications précédentes, dans lequel les têtes d'extrémité (7a, 7b, 10a, 10b) correspondantes du corps-plaque (7) et du corps prismatique (10) ont les parois frontales (12, 13) formées par une pluralité de segments de paroi consécutifs ayant une extension angulaire différente de manière à former des parois correspondantes avec des surfaces discontinues capables d'augmenter la friction d'interférence contre les parois du canal (3), suite à la rotation autour de l'axe (Z).

4. Dispositif selon l'une quelconque des revendications précédentes, dans lequel l'élément de raccordement (8) est de forme cylindrique ; l'élément de raccordement (8) étant couplé, avec possibilité de rotation, dans un siège correspondant (14) réalisé sur le corps (9) de l'accessoire.

5. Dispositif selon l'une quelconque des revendications précédentes, dans lequel le corps-plaque (7) et le corps prismatique (10) ont une extension étant asymétrique par rapport à l'axe (Z) de rotation étant transversal au fond (3c) du canal (3), c'est-à-dire que les deux têtes d'extrémité (7a, 7b, 10a, 10b) de chaque corps (7, 10) se trouvent à des distances différentes (D7a, D7b, D10a, D10b) par rapport à l'axe (Z) de rotation.

6. Dispositif selon l'une quelconque des revendications précédentes, dans lequel, le corps-plaque (7) et le corps prismatique (10) ont une extension transversale asymétrique par rapport à l'axe transversal (Z) de rotation, c'est-à-dire que la distance entre les paires de parois rectilignes ou côtés (7c, 7d, 10c, 10d) de chaque corps (7, 10) se trouvent à des distances différentes (D7c, D7d, D10c, D10d) par rapport à l'axe (Z) de rotation.

7. Dispositif selon l'une quelconque des revendications précédentes, dans lequel l'élément de raccordement (8) est configuré pour être relié au corps (9) de l'accessoire dans un siège (14) réalisé de manière asymétrique par rapport à un axe médian longitudinal (X) du corps (9) de l'accessoire.

8. Dispositif selon l'une quelconque des revendications précédentes, comprenant des moyens de guidage et de fin de course (15) positionnés entre le corps prismatique (10) et le corps (9) de l'accessoire pour former au moins deux positions de limite de fonctionnement entre une première position de libre passage du corps-plaque (7) à travers l'ouverture (5) formée par les portions d'extrémité (4a, 4b), et une deuxième position d'interférence maximale du corps-plaque (7) et du corps prismatique (10) sur les ailettes (3a, 3b) et sur les portions terminales (4a, 4b), dans lequel les corps (7, 10) sont pivotés selon un angle prédéterminé (α) par rapport à la première position de libre passage.

9. Dispositif selon la revendication 8, dans lequel les moyens de guidage et de fin de course (15) comprennent un axe (16) dépassant d'une surface horizontale supérieure du corps prismatique (10) ; l'axe (16) étant contraint, lors de l'utilisation, à l'intérieur d'une fente en forme d'arc (17) réalisée sur le corps (9) de l'accessoire.
